# FASCICULE DE BREVET EUROPEEN

(11) **EP 1 611 786 B1**
(45) Date de publication et mention de la délivrance du brevet: **07.05.2008**
(21) Numéro de dépôt: 05370013.4
(22) Date de dépôt: 08.06.2005
(51) Int. Cl.: A01K 97/00

(54) **Accessoire de pêche, notamment coupe-fil**
Angelzubehör, insbesondere Drahtschneider
Accessory for angling, in particular wire-cutter

(30) Priorité: 29.06.2004 FR 0407170
(43) Date de publication de la demande: 04.01.2006
(73) Titulaire: PROMILES, 59650 Villeneuve D'Ascq (FR)
(72) Inventeur: Zwierski, Sébastien, 59790 Ronchin (FR)
(74) Mandataire: Hennion, Jean-Claude

(56) Documents cités:
- US-A- 3 990 148
- US-A- 4 726 140
- US-A- 4 730 409

## Description

La présente invention concerne un accessoire de pêche, adaptable sur le corps d'une canne à pêche, notamment canne à pêche à moulinet. Elle concerne plus particulièrement un accessoire de pêche apte à être utilisé comme un coupe-fil et éventuellement pour l'accrochage temporaire de l'hameçon.

Un coupe-fil selon le préambule de la revendication 1 est connu du document US-A-3 990 148.

Un coupe-fil adaptable sur le corps d'une canne à pêche est connu par le document US.A.4.730.409. Cet accessoire comporte une lame de coupe qui est prise en sandwich entre deux plaques fixées l'une à l'autre. L'une des deux plaques est solidaire d'une pièce semi-cylindrique ouverte permettant l'adaptation par emboîtement de l'accessoire sur le corps de la canne à pêche. L'accès à la lame de coupe se fait par une échancrure formée dans les deux plaques assemblées. De part et d'autre de cette échancrure, les plaques ont une forme recourbée vers l'intérieur de l'échancrure, ce qui permet l'accrochage temporaire de l'hameçon.

Cet accessoire présente cependant des inconvénients. Les deux plaques assemblées ainsi que la lame sont montées radialement par rapport au corps de la canne à pêche avec un encombrement qui peut être supérieur au diamètre du corps. Ceci peut être une gêne pour l'utilisateur. Sa fabrication est nécessairement complexe, nécessitant la réalisation puis l'assemblage de plusieurs pièces. De plus, en ce qui concerne la coupe du fil de pêche, comme illustrée à la figure 6 de ce document, elle nécessite que l'utilisateur réalise la tension nécessaire à la coupe en tenant le fil de pêche de ses deux mains.

Le but de la présente invention est de proposer un coupe-fil, adaptable sur le corps d'une canne à pêche, qui pallie les inconvénients du coupe-fil connu par le document US.A.4.730.409 précité.

Ce but est parfaitement atteint par un coupe-fil selon la revendication 1.

Ainsi, selon la disposition particulière de la présente invention, le coupe-fil est quasiment intégré sur la surface extérieure du corps de la canne à pêche, ne dépassant de celui-ci que d'une hauteur très faible de l'ordre de quelques millimètres. De plus, pour la coupe du fil, il suffit à l'utilisateur, d'un mouvement circulaire , de faire passer le fil sous la partie arrière du corps principal tout en l'amenant d'abord dans la zone de coincement puis dans la zone de coupe et ensuite d'exercer une traction vers le haut sur le fil,bloqué dans la zone de coincement pour obtenir le sectionnement de celui-ci dans la zone de coupe.

Dans une variante de réalisation, la zone de coincement est définie également par un angle aigu de découpe entre la partie arrière du corps principal et l'autre aile longitudinale. Cette version convient parfaitement aux fils de pêche du type tresse qui comparativement aux fils de type mono-filament , ont un diamètre supérieur et sont moins glissants.

Selon une autre variante de réalisation, la zone de coincement est obtenue par repliement sur une aile longitudinale d'une lamelle reliée soit à ladite aile soit à une partie latérale du corps central. Ainsi, dans son mouvement circulaire, il suffit à l'utilisateur de passer le fil de pêche sous la lamelle et sous la partie arrière relevée pour obtenir le coincement du fil entre ladite lamelle et l'aile longitudinale et réaliser comme précédemment le sectionnement du fil par une traction vers le haut au niveau de la zone de coupe. Ce mode de réalisation convient parfaitement aux fils de pêche du type mono-filament, le coincement du fil étant réalisé entre les deux surfaces en contact d'une part de la lamelle et d'autre part de l'aile longitudinale.

Dans une variante de réalisation, le corps principal a sa partie centrale qui est d'une part percée d'un trou et d'autre part relevée par rapport à la partie avant. Dans cette variante , il est possible à l'utilisateur d'introduire dans le trou du corps central l'extrémité de l'hameçon , l'ardillon étant logé sous le corps principal et n'étant donc pas directement accessible. Ceci présente un autre avantage par rapport à l'accessoire du document US.A.4.730.409, dans son utilisation pour l'accrochage temporaire de l'hameçon.

Dans une variante de réalisation, les ailes longitudinales sont reliées entre elles par au moins une entretoise qui, lors de l'emboutissage, est recourbée en arc de cercle. La présence de cette entretoise permet de maintenir constant l'écartement entre les deux ailes latérales et donc d'éviter l'éventuelle déformation des zones de coincement et de coupe lors de la mise en place de l'accessoire sur le corps de la canne. Cette entretoise améliore aussi la tenue du coupe-fil sur le corps de la canne à pêche, lors du ligaturage des ailes longitudinales , limitant sa capacité de glissement.

La présente invention sera mieux comprise à la lecture de la description qui va être faite de deux exemples de réalisation d'un coupe-fil à monter sur le corps d'une canne à pêche, formé d'une seule pièce obtenue par découpe et emboutissage d'une plaque métallique, illustrés par le dessin annexé dans lequel :
La figure 1 est une représentation schématique vue de dessus et en plan d'une plaque métallique découpée, avant emboutissage, d'un premier exemple de coupe-fil ,
La figure 2 est une vue schématique en perspective du coupe-fil selon le premier exemple , après emboutissage,
Les figures 3 et 5 sont des représentations schématiques vue de dessus et en plan d'une plaque métallique découpée, avant emboutissage, d'un second et d'un troisième exemples de coupe-fil avec une lamelle de coincement reliée à l'aile longitudinale (figure 3) et à la partie latérale du corps central (figure 5), et
La figure 4 illustre la plaque de la figure 3, après pliage de ladite lamelle.

L'accessoire de pêche qui va être décrit ci-après peut présenter une double fonction, celle d'un coupe-fil et celle d'un moyen d'accrochage temporaire de l'hameçon. Dans chacune de ces deux fonctions, cet accessoire présente des avantages importants. S'agissant du coupe-fil, il s'intègre parfaitement dans la gestuelle naturelle de l'utilisateur, pouvant être mise en oeuvre notamment de la main gauche alors que l'utilisateur tient sa canne de la main droite ou éventuellement inversement. Quant à l'accrochage temporaire de l'hameçon, il évite tout risque de blessure, l'ardillon étant totalement inaccessible.

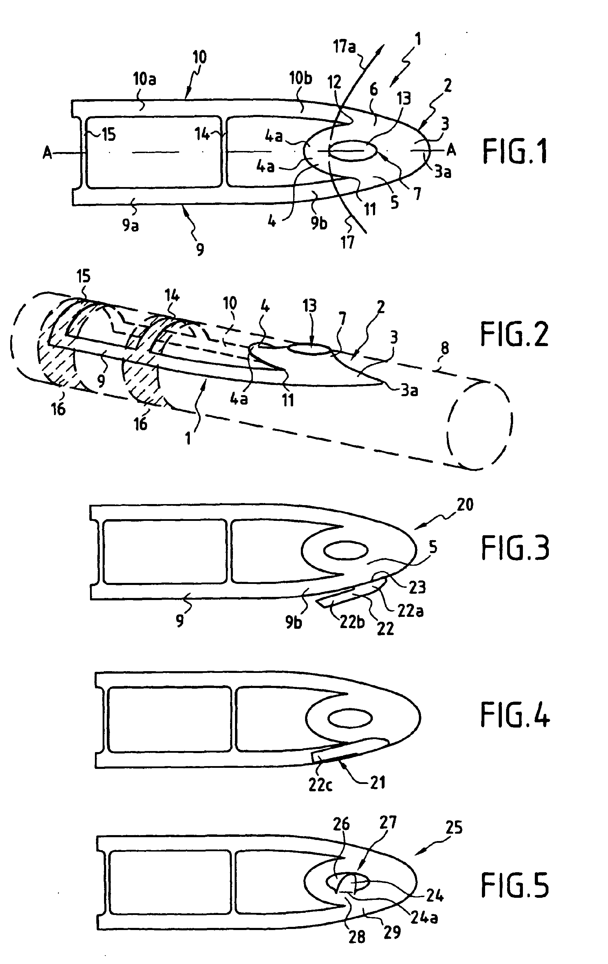

Les figures 1 et 2 illustrent un premier exemple de cet accessoire 1 qui est réalisé par découpe et emboutissage d'une plaque métallique de faible épaisseur par exemple en acier inoxydable de type, ayant une épaisseur de 0,2mm. L'emboutissage qui suit cette découpe permet la mise en forme tridimensionnelle des différentes parties composant l'accessoire 1.

Plus précisément , l'accessoire comporte en premier lieu un corps principal 2 qui globalement a une forme ovale , avec une partie avant 3 , une partie arrière 4 et deux parties latérales 5 et 6, lesdites parties encadrant une partie centrale 7. Ce corps principal 2, de même que l'accessoire 1 de ce premier exemple, sont symétriques par rapport à un plan longitudinal A-A qui, lorsque l'accessoire 1 est posé sur le corps 8 de la canne à pêche, correspond également au plan longitudinal dudit corps.

Les termes avant et arrière sont utilisés en relation avec la direction prise par l'accessoire lorsqu'il est placé sur le corps 8 de la canne à pêche.

L'accessoire 1 comporte également deux ailes longitudinales 9, 10, qui prolongent vers l'arrière les deux parties latérales 5 et 6 du corps principal 2.

Les ailes longitudinales 9, 10 comportent des portions arrière rectilignes 9a, 10a et parallèles entre-elles qui convergent vers les parties latérales 5, 6 du corps principal 2 par des portions légèrement incurvées 9b, 10b.

Au niveau du raccordement entre les portions incurvées 9b, 10b des ailes longitudinales 9, 10 et les parties latérales 5, 6, les découpes de la plaque métallique forment des angles aigus 11, 12 qui constituent d'un côté une zone de coincement et de l'autre une zone de coupe, selon le sens d'utilisation de l'accessoire 1 par l'utilisateur.

La partie centrale 7 du corps principal 2 est percée d'un trou 13 qui, dans l'exemple illustré, a également une forme ovale, mais est décentré par rapport au corps principal 2, étant plus proche du bord 4a de la partie arrière 4 que du bord avant 3a de la partie avant 3.

Les deux ailes longitudinales 9, 10 sont reliées entre-elles, au niveau des portions arrière rectilignes 9a, 10a par deux entretoises 14, 15.

Comme indiqué ci-dessus, l'accessoire 1 est monobloc, étant obtenu à partir d'une même plaque métallique par découpe et emboutissage. L'outil de découpe est conçu pour donner aux différentes parties la configuration décrite ci-dessus dans le plan. L'emboutissage donne à l'accessoire sa configuration tridimensionnelle permettant tout d'abord qu'il puisse s'adapter facilement contre le corps cylindrique 8 d'une canne à pêche, représenté en pointillés sur la figure 2.

L'emboutissage va donc conférer globalement à l'accessoire une courbure en arc de cercle selon le plan de symétrie A-A, comme illustré sur la figure 2. Le contact entre l'accessoire 1 et le corps cylindrique 8 de la canne à pêche est réalisé au niveau des deux ailes longitudinales 9, 10, des entretoises 14, 15 et également du bord 3a de la partie avant 3 du corps principal 2. Par contre le bord 4a de la partie arrière 4 du corps principal 2 est légèrement relevé par rapport au corps cylindrique 8 de la canne de façon à permettre, par un mouvement circulaire, l'introduction du fil de pêche sous ladite partie arrière 4 jusqu'aux zones de coincement 11 et de coupe 12, comme illustré à la figure 1.

De plus la partie médiane 7 surmontée par le trou 13 est également relevée par rapport au corps cylindrique 8, en sorte que soit ménagé, entre le trou 13 et le bord 3a de la partie avant 3, un espace intérieur entre le corps principal 2 et le corps cylindrique 8 de la canne pouvant servir de logement à l'extrémité de l'hameçon incluant l'ardillon.

Il est à noter que l'accessoire 1 n'est pas strictement limité à son utilisation pour une canne à pêche dont le corps possède un diamètre déterminé, qui correspondrait strictement à la courbure donnée à l'accessoire 1 lors de son emboutissage. En effet du fait de sa faible épaisseur, l'accessoire possède une certaine flexibilité, notamment au niveau de ses entretoises 14,15 qui permet une adaptation à des cannes de diamètres différents.

Une fois appliquée sur la surface du corps cylindrique 8 de la canne, selon la direction longitudinale de celle-ci, comme illustré à la figure 2, la fixation de l'accessoire se fait en ligaturant les ailes longitudinales 9, 10 au moyen notamment de ruban adhésif 16, par exemple au niveau des deux entretoises 14, 15.

Il a été remarqué que le positionnement optimal de l'accessoire sur le corps cylindrique de la canne à pêche était immédiatement après la poignée de la canne (ou la zone servant de poignée) et était disposée légèrement en oblique, d'un angle de l'ordre de 45°C.

Si on considère le plan A-A de symétrie de l'accessoire 1, ce plan est incliné par rapport à un plan vertical passant par l'axe longitudinal du corps cylindrique 8 de la canne en position normale d'utilisation.

Cette inclinaison se fait du côté gauche si l'utilisateur porte la canne de la main droite et inversement, du côté droit si l'utilisateur porte la canne de la main gauche.

Le fil de pêche 17 est introduit par l'utilisateur sous le bord relevé 4a de la partie arrière 4 du corps principal 2, selon un mouvement circulaire, en sorte que le fil de pêche 17 vienne se loger sous ladite partie arrière 4 jusqu'à atteindre les angles aigus de découpe entre ladite partie arrière 4 et les ailes longitudinales 9,10.

En exerçant une traction vers le haut de l'extrémité 17a du fil 17 que l'utilisateur tient à la main, il réalise le sectionnement de cette extrémité 17a du fait de la présence des arêtes de découpe de la plaque au niveau de cet angle aigu, faisant office de zone de coupe 12.

Ce sectionnement peut être obtenu grâce au fait que le fil de pêche est bloqué en position et est donc empêché de glisser au niveau des découpes en angle aigu de la zone de coincement 11.

Ce premier exemple de réalisation dans lequel la zone de coincement 11 est constituée par l'angle aigu de découpe entre la partie arrière 4 et l'autre aile longitudinale 9 est particulièrement bien adapté au fil de pêche dont l'état de surface permet un coincement ponctuel, notamment des fils du type tresse.

Le second exemple de réalisation décrit ci-après et illustré aux figures 3 et 4 est particulièrement adapté aux fils lisses, notamment de type mono-filament, qui ont un état de surface plus glissant et pour lesquels le coincement demande un contact surfacique.

Dans ce second exemple, l'accessoire 20 diffère de celui 1 du premier exemple uniquement par la configuration de la zone de coincement 21 qui, en l'occurrence, est une zone comprise entre l'aile longitudinale 9 et une lamelle 22.

Lors de la découpe de la plaque métallique constituant l'accessoire 20, il est formé une lamelle 22 qui constitue en quelque sorte une excroissance de la portion incurvée 9b de l'aile longitudinale 9 au niveau de son raccordement avec la partie latérale 5 du corps principal 2.

Comme cela apparaît clairement sur la figure 3, la lamelle 22 a une portion avant 22a qui est donc reliée à l'aile latérale 9 et une portion arrière 22b qui est rectiligne et qui est tout juste adjacente à l'aile longitudinale 9.

Pour réaliser la zone de coincement 21, on procède au pliage de la plaque métallique ainsi découpée en rabattant la lamelle 22 selon la ligne de pliage 23 correspondant à la jonction entre ladite lamelle 22 et l'aile longitudinale 9 jusqu'à application de ladite lamelle 22 sur la face supérieure de l'aile longitudinale 9.

De préférence, le bord arrière 22c de ladite lamelle 22 est relevé afin de faciliter l'introduction du fil de pêche 17 dans la zone de coincement 21.

Le troisième exemple de réalisation illustré à la figure 5 ne diffère du second exemple que par l'emplacement de la lamelle 24. Lors de la découpe de la plaque métallique constituant l'accessoire 25, la lamelle 24 est constituée par une excroissance d'une partie latérale du corps principal vers l'intérieur du trou 26. Comme cela apparaît sur la figure 5, la lamelle 24 est reliée à la partie latérale 28 par une ligne de pliage 24a.

Pour réaliser la zone de coincement , on procède au pliage de la plaque métallique en rabattant la lamelle 24 selon la ligne de pliage 24a jusqu'à application de ladite lamelle 24 sur la face supérieure de l'aile longitudinale 29.

## Revendications

1. Coupe-fil, adaptable sur le corps d'une canne à pêche, formé d'une seule pièce et obtenu par découpe et emboutissage d'une pièce métallique, le coupe-fil étant apte à être fixé par ligature autour du corps de canne à pêche, ledit coupe-fil comprenant une zone de découpe, **caractérisé en ce qu**'il comporte d'une part un corps principal (2) avec une partie avant (3), une partie arrière (4) et deux parties latérales (5,6) et d'autre part deux ailes longitudinales (9,10) prolongeant vers l'arrière les parties latérales (5,6) du corps principal (2), en ce que la découpe et l'emboutissage de la plaque sont réalisés en sorte que, le coupe-fil (1) étant monté sur le corps (8) de la canne à pêche, les ailes longitudinales (9,10) et au moins la partie avant (3) du corps principal (2) sont en contact avec le corps (8) de la canne à pêche, la partie arrière (4) du corps principal (2) étant relevée pour le passage du fil (17), et en sorte que, entre la partie arrière (4) du corps principal (2) et les ailes longitudinales (9, 10), d'un côté une découpe forme un angle aigu définissant la zone de coupe (12) tandis que de l'autre côté est prévue une zone de coincement du fil de pêche (17).

2. Coupe-fil selon la revendication 1 **caractérisé en ce que** la zone de coincement (11) est définie également par un angle aigu de découpe entre la partie arrière (4) du corps principal et l'autre aile longitudinale (9).

3. Coupe-fil selon la revendication 1 **caractérisé en ce que** la zone de coincement (11) est obtenue par repliement sur l'aile longitudinale (9, 29) correspondante d'une lamelle (22, 24) reliée à ladite aile (9) ou à une partie latérale (28) du corps principal.

4. Coupe-fil selon l'une des revendications 1 à 3 **caractérisé en ce que** les ailes longitudinales (9,10) sont reliées entre elles par au moins une entretoise (14,15) qui, lors de l'emboutissage, est recourbée en arc de cercle.

5. Coupe-fil selon l'une des revendications 1 à 4 comprenant un trou (13) pour le logement de l'extrémité de l'hameçon **caractérisé en ce que** le corps principal (2) a sa partie centrale (7) qui est d'une part, percée du trou (13) et d'autre part, relevée par rapport à la partie avant (3) en sorte de servir de logement temporaire pour l'extrémité d'un hameçon incluant l'ardillon.

## Claims

1. A line cutter suitable for fitting to the body of a fishing rod, the cutter being formed as a single piece that is obtained by cutting out and stamping a metal plate the line cutter being suitable for fastening around the body of the fishing rod by binding, said line cutter comprising a cutting out zone, the line cutter being **characterised in that** it comprises firstly a main body (2) with a front portion (3), a rear portion (4), and two side portions (5, 6), and secondly two longitudinal prongs (9, 10) rearwardly extending the side portions (5, 6) of the main body (2), **in that** the plate is cut out and stamped in such a manner that, when the line cutter (1) is mounted on the body (8) of a fishing rod, the longitudinal prongs (9, 10) and at least the front portion (3) of the main body (2) come into contact with the body (8) of the fishing rod, the rear portion (4) of the main body (2) being raised so as to allow the line (17) to be passed thereunder, and in such a manner that between the rear portion (4) of the main body (2) and the longitudinal prongs (9, 10), a cutout of acute-angled shape on one side forms a cutting zone (12), while on the other side a jamming zone is provided for jamming the fishing line (17).

2. A line cutter according to claim 1, **characterised in that** the jamming zone (11) is also defined by an acute-angle cutout between the rear portion (4) of the main body and the longitudinal prong (9).

3. A line cutter according to claim 1, **characterised in that** the jamming zone (11) is obtained by folding a flap (22, 24) onto the corresponding longitudinal prong (9, 29), which flap is connected to said prong (9) or to a side portion (28) of the main body.

4. A line cutter according to one of claims 1 to 3, **characterised in that** the longitudinal prongs (9, 10) are interconnected by at least one spacer (14, 15) which, during stamping, is curved to become circularly arcuate.

5. A line cutter according to one of claims 1 to 4 comprising a hole (13) for receiving the end of the hook, the cutter being **characterised in that** the main body (2) has its central portion (7) firstly pierced by a hole (13), and secondly raised relative to the front portion (3) so as to serve as a temporarily housing for receiving the end of a fish hook that includes the barb.

## Patentansprüche

1. Schnurschneider, der an dem Körper einer Angelrute angebracht werden kann und der von einem einzigen Teil gebildet und durch Ausstanzen und Ziehen eines Metallteils erhalten wird, wobei der Schnurschneider geeignet ist, um den Körper der Angelrute herum festgebunden zu werden, wobei der Schnurschneider einen Ausschnittsbereich aufweist, **dadurch gekennzeichnet, daß** er einerseits einen Hauptkörper (2) mit einem vorderen Teil (3), einem hinteren Teil (4) und zwei Seitenteilen (5, 6), und andererseits zwei Längsschenkel (9, 10) aufweist, welche die Seitenteile (5, 6) des Hauptkörpers (2) nach hinten fortsetzen, daß das Ausstanzen und Ziehen der Platte derart vollzogen werden, daß - wenn der Schnurschneider (1) an dem Körper (8) der Angelrute angebracht ist - die Längsschenkel (9, 10) und wenigstens der vordere Teil (3) des Hauptkörpers (2) mit dem Körper (8) der Angelrute in Kontakt sind, wobei der hintere Teil (4) des Hauptkörpers (2) für den Durchgang der Schnur (17) erhöht ist, sowie derart, daß - zwischen dem hinteren Teil (4) des Hauptkörpers (2) und den Längsschenkeln (9, 10) - auf der einen Seite ein Ausschnitt einen spitzen Winkel bildet, der den Schneidbereich (12) definiert, während auf der anderen Seite ein Bereich zum Festklemmen der Angelschnur (17) vorgesehen ist.

2. Schnurschneider nach Anspruch 1, **dadurch gekennzeichnet, daß** der Festklemmbereich (11) ebenfalls durch einen spitzen Ausschnittswinkel zwischen dem hinteren Teil (4) des Hauptkörpers und dem anderen Längsschenkel (9) definiert ist.

3. Schnurschneider nach Anspruch 1, **dadurch gekennzeichnet, daß** der Festklemmbereich (11) **dadurch** erhalten wird, daß eine Lamelle (22, 24), die mit dem Schenkel (9) oder mit einem Seitenteil (28) des Hauptkörpers verbunden ist, auf den Längsschenkel (9, 29) umgeschlagen wird.

4. Schnurschneider nach einem der Ansprüche 1 bis 3, **dadurch gekennzeichnet, daß** die Längsschenkel (9, 10) durch wenigstens einen Steg (14, 15), der während des Ziehens kreisbogenförmig gebogen wird, untereinander verbunden sind.

5. Schnurschneider nach einem der Ansprüche 1 bis 4, mit einem Loch (13) für die Aufnahme des Endes des Angelhakens, **dadurch gekennzeichnet, daß** der mittlere Teil (7) des Hauptkörpers (2) einerseits von dem Loch (13) durchbohrt ist und andererseits gegenüber dem vorderen Teil (3) erhöht ist, um dem den Dorn einschließenden Ende eines Angelhakens als vorübergehende Aufnahme zu dienen.
